# EUROPÄISCHE PATENTANMELDUNG

(11) **EP 4 008 496 A1**
(43) Veröffentlichungstag der Anmeldung: **08.06.2022**
(21) Anmeldenummer: 20211992.1
(22) Anmeldetag: 04.12.2020
(51) Int. Cl.: B25J 9/16

(54) **VALIDIEREN EINER POSE EINES ROBOTERS**

(71) Anmelder: SICK AG, 79183 Waldkirch (DE)
(72) Erfinder: Hofmann, Dr. Christoph, 79108 Freiburg (DE); Steinkemper, Dr. Heiko, 79100 Freiburg (DE); Uhl, Fabian, 77978 Schuttertal (DE)

(57) **Zusammenfassung**

Es wird ein Verfahren zum Validieren einer Pose eines Roboters (10) mit einer Position und/oder einer Orientierung angegeben, bei dem die Pose zumindest teilweise durch eine Robotersteuerung (14) des Roboters (10) bestimmt wird, weitere Kinematikinformationen der Pose aus Sensorinformationen eines mit dem Roboter (10) mitbewegten Sensors (18) bestimmt werden und die von der Robotersteuerung (14) bestimmte Pose anhand der Kinematikinformationen validiert wird. Dabei ist der Sensor ein Inertialsensor (18), und es werden aus der von der Robotersteuerung (14) bestimmten Pose ein erster Geschwindigkeitswert und aus den Kinematikinformationen ein zweiter Geschwindigkeitswert ermittelt und zur Validierung die Geschwindigkeitswerte miteinander verglichen.

## Beschreibung

Die Erfindung betrifft ein Verfahren zum Validieren einer Pose eines Roboters mit einer Position und/oder einer Orientierung und eine sichere Posenbestimmungsvorrichtung nach dem Oberbegriff von Anspruch 1 beziehungsweise 14.

Voraussetzung für eine enge Zusammenarbeit von Robotern mit Personen (MRK, Mensch-Roboter-Kollaboration) ist die verlässliche Vermeidung von Unfällen. Dazu wird der Roboter mit Hilfe von Sensoren überwacht, und wenn demnach eine Gefährdung einer Person droht, wird eine geeignete Absicherungsmaßnahme ergriffen. Derart in der Sicherheitstechnik eingesetzte Sensoren müssen besonders zuverlässig arbeiten und deshalb hohen Sicherheitsanforderungen gerecht werden, beispielsweise aus der Norm EN13849 für Maschinensicherheit und der Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile. Weitere relevante Normen in diesem Zusammenhang sind beispielsweise die ISO 10218 für Industrieroboter oder die ISO 15066 für kollaborierende Roboter.

Eine Grundvoraussetzung für solche Sicherheitsanwendungen ist die sichere Kenntnis der aktuellen Roboterpose. Dabei bezeichnet Pose die Position und die Orientierung in bis zu sechs Freiheitsgraden. Häufig bezieht sich das auf eine Armspitze oder anschaulich eine Hand (Endeffektor oder TCP, Tool Center Point) eines Roboterarms. Der zeitliche Verlauf der Pose gibt vollständige Information über die Kinematik, so dass eine angemessene Absicherung möglich wird. Sichere Kenntnis wiederum bedeutet, dass die Pose unter den strengen Anforderungen einschlägiger Sicherheitsnormen verlässlich erfasst ist, von denen oben einige genannt sind.

Für seine Bewegungsplanung kennt ein Roboter üblicherweise seine eigene Pose und misst dafür beispielsweise mit Drehgebern die Winkelstellung an seinen Gelenken. Diese Information ist aber in aller Regel nicht sicher, und wenn sie es ist, so gelingt dies nur mit sehr kostspieligen Maßnahmen wie einer redundanten Auslegung der Drehgeber. Validieren der Pose heißt nun, ursprünglich unsichere Informationen zu sicheren Informationen im Sinne der funktionalen Sicherheit aufzuwerten.

Einige heutige Industrieroboter verfügen über eine sogenannte virtuelle Koordinatenbegrenzung, die mit einem bestimmten Sicherheitsniveau garantiert, dass der dadurch eingefasste Arbeitsbereich nicht verlassen wird. Die aktuelle Roboterpose innerhalb der Koordinatenbegrenzung jedoch ist zu keinem Zeitpunkt sicher zugänglich. Somit ist nicht mehr erreicht, als dass der Roboter in der meist sehr großvolumigen Zone innerhalb der virtuellen Koordinatenbegrenzungen bleibt. Eine enge Mensch-Roboter-Kooperation wird dadurch noch keineswegs möglich. Trotzdem ist selbst dieses eingeschränkte Sicherheitsmerkmal noch wenig verbreitet und teuer.

Eine weitere Sicherheitsfunktion für einen Roboter nach dem Stand der Technik ist die Bereitstellung einer sicheren Ausgangsposition (safe home position). Das garantiert aber lediglich das Erreichen beziehungsweise Beibehalten einer einzigen sicheren Position, womit sich keine dynamische Mensch-Maschine-Kollaboration umsetzen lässt.

Die DE 10 2015 112 656 A1 stellt eine Absicherungslösung vor, bei der ein Distanzsensor beziehungsweise eine Mehrfachanordnung von Distanzsensoren nach dem Prinzip der Lichtlaufzeitmessung mit dem Werkzeug am Roboterarm mitbewegt wird. Damit wird eine Art virtuelle Schutzglocke um das Werkzeug überwacht und der Roboter bei Eindringen eines sicherheitsrelevanten Objekts gebremst oder angehalten. Dies ist soweit unabhängig von der jeweils aktuellen Pose des Roboters, indem die virtuelle Schutzglocke für den ungünstigsten Fall ausgelegt wird. Die DE 10 2019 110 882 A1 erweitert den Ansatz um eine Anpassung von Abstandsschwellen und damit der Ausdehnung der virtuellen Schutzglocke während einer Annäherungsbewegung an eine Arbeitsoberfläche oder ein Werkstück. In der EP 3 744 482 A1 wird auch die Ausrichtung der schützenden Strahlen mindestens eines Distanzsensors und damit die Form, insbesondere Öffnungswinkel und/oder Durchmesser der Schutzglocke verändert. Hierfür wären sichere Informationen über die aktuelle Pose sehr hilfreich für eine angemessene Anpassung der virtuellen Schutzglocke, aber für diesen Aspekt bieten diese Dokumente keine neuen Ansätze.

Der Stand der Technik bietet weiterhin sehr leistungsfähige Inertialsensoren (IMU, Inertial Measurement Unit), die oft mehrere Einzelsensoren miteinander kombinieren und damit Messinformation über Drehrate und Beschleunigung liefern. Derartige Inertialsensoren sind aber weder allein sicher, noch werden sie bisher an Robotern in Sicherheitsanwendungen zur Vermeidung von Unfällen eingesetzt. Eine Beispielanwendung ist die Navigation im Innenbereich, wie beispielsweise in der Arbeit Poulose, Alwin, Odongo Steven Eyobu, and Dong Seog Han. "An indoor position-estimation algorithm using smartphone IMU sensor data." IEEE Access 7 (2019): 11165-11177.

Gui, Pengfei, Liqiong Tang, and Subhas Mukhopadhyay. "MEMS based IMU for tilting measurement: Comparison of complementary and Kalman filter based data fusion." 2015 IEEE 10th conference on Industrial Electronics and Applications (ICIEA), IEEE, 2015, befasst sich mit einer verbesserten Orientierungsmessung einer IMU unter Verwendung eines Kalman-Filters. Außer einem allgemeinen Verweis auf die Anwendbarkeit in der Robotik hat das aber keinen weiteren Zusammenhang mit der Validierung einer Roboterpose.

In der Arbeit von Chen, Xiaohan, et al. "Pose estimation of robotic end-effectors under low speed motion using EKF with inertial and SE (3) measurements." 2015 IEEE International Conference on Advanced Intelligent Mechatronics (AIM), IEEE, 2015, wird die Orientierung des Endeffektors des Roboters mit einer IMU bestimmt und dies über einen Kalman-Filter mit einer Posenbestimmung fusioniert. Die Posenbestimmung fußt auf einem visuellen System. Der Kalman-Filter führt zwar bei diesem Vorgehen in vielen Situationen zu einer besseren Schätzung, gewährleistet aber keineswegs funktionale Sicherheit.

In der DE 10 2019 111 642 B3 wird ein Laserscanner zum Absichern der Umgebung eines Fahrzeugs eingesetzt. Die Geschwindigkeit des Fahrzeugs wird von Drehgebern an den Rädern gemessen, und dies wird mit Bewegungsinformation einer in den Laserscanner integrierten Inertialmesseinheit verglichen. Die Komplexität der Bewegung eines Fahrzeugs ist aber in keiner Weise vergleichbar mit den wechselnden Posen eines Roboters, und nicht einmal die Kinematik des gegenüber dem Roboter viel einfacheren Fahrzeugs ist über dessen Geschwindigkeit auch nur annähernd vollständig beschrieben. Für die Absicherung eines Roboterarms wäre ein Laserscanner zudem weder von seiner Baugröße noch seinem Messprinzip besonders geeignet.

Aus der DE 10 2017 111 885 B4 ist ein Verfahren zum Überwachen einer Maschine bekannt, an der eine Kamera angebracht ist, um während der Bewegung aus der Ego-Perspektive Bilder aufzunehmen und daraus die Eigenposition zu bestimmen. Das wird dazu verwendet, Stoppzeit und Nachlaufweg der Maschine nach einer Absicherung auf sichere Weise zu bestimmen oder zu validieren. Um die kinetischen Größen zusätzlich diversitär zu prüfen oder zu verbessern, können mehrere Kameras oder zusätzliche Sensoren wie Drehgeber oder Trägheitssensoren verwendet werden. Die Validierung in der Nachlaufphase ist jedoch nur ein vorbereitender Schritt, in dem die von den späteren eigentlichen Arbeitsschritten unbeeinträchtigte Sicht der Kamera gewährleistet und beispielsweise vorübergehend eine sperrige Kamera am Roboter angebracht werden kann.

Die EP 3 650 740 A1 bestimmt die Pose eines beweglichen Maschinenteils mit Hilfe mehrerer Positionssensoren und zugleich die Eigenposition einer an dem beweglichen Maschinenteil angebrachten Kamera mit einem Verfahren entsprechend der DE 102017 111 885 B4. Die somit zweifach bestimmten Bewegungsbahnen werden miteinander verglichen.

Die DE 102018 118 265 A1 beschreibt ein Verfahren zum Absichern einer Maschine mit einer Kamera, bei dem mit Hilfe der Kamera in einer Einlernphase eine Referenzkarte der Umgebung erzeugt wird, an der sich die Kamera in der anschließenden Betriebsphase orientiert. Folglich ist auch hier die Grundlage ein optisches Verfahren, das durch mehrere Kameras oder andere Sensoren einschließlich Drehgebern oder Trägheitssensoren zur diversitären Prüfung oder Verbesserung der kinetischen Größen verbessert werden kann.

Die WO 2020/200386 A1 befasst sich mit einem erweiterbaren Sicherheitssystem für einen Roboter. Dabei wird geprüft, ob ein benutzerdefinierter Sicherheitsparameter in einem vorgegebenen Bereich bleibt und andernfalls eine Sicherheitsmaßnahme eingeleitet. Dabei geht es jedoch um die Bereitstellung einer allgemeinen Schnittstelle für Sicherheitsparameter und nicht konkret um die Pose.

Es ist daher Aufgabe der Erfindung, eine verlässliche Alternative zum Bestimmen einer Pose eines Roboters anzugeben.

Diese Aufgabe wird durch ein Verfahren zum Validieren einer Pose eines Roboters mit einer Position und/oder einer Orientierung und eine sichere Posenbestimmungsvorrichtung nach Anspruch 1 beziehungsweise 14 gelöst. Weiterhin bedeutet Pose die Position und/oder Orientierung in jeweils bis zu drei Freiheitsgraden und damit insgesamt bis zu sechs Freiheitsgraden. Die Pose ist nur vorzugsweise vollständig in allen Freiheitsgraden bestimmt, in manchen Situationen kommt es nur auf einen Teil der Freiheitsgrade an. Bei dem Roboter handelt es sich vorzugsweise um einen mehrgliedrigen Roboterarm mit entsprechend komplexem Bewegungsverhalten.

Es werden Informationen über die Pose aus zwei verschiedenen Quellen genutzt. Die erste Quelle ist der Roboter selbst beziehungsweise dessen Robotersteuerung, der seine eigene Pose beispielsweise aus der Messung von Winkelstellungen an seinen Gelenken kennt. Die Funktion Pose(t) zu verschiedenen Zeitpunkten t beschreibt die vollständige Kinematik des Roboters. Diese Information ist jedoch nicht sicher im einleitend genannten Sinne einschlägiger Sicherheitsnormen für Maschinensicherheit oder Zusammenarbeit von Personen und Robotern beziehungsweise Unfallvermeidung an Robotern. Weitere Kinematikinformationen werden über einen Sensor als zweite Quelle gewonnen, der die Bewegung des Roboters mitvollzieht und insbesondere daran mitbewegt angebracht ist. Im Gegensatz zur über die Robotersteuerungen bestimmten Pose enthalten die Sensorinformationen jedenfalls nicht originär die vollständige Kinemathek, d. h. der Sensor misst zumindest nicht direkt Position beziehungsweise Orientierung.

Die von der Robotersteuerung bestimmt Pose wird aus den Kinematikinformationen validiert, also geprüft, bestätigt oder abgesichert, um festzustellen, wenn die von der Robotersteuerung bestimmte Pose fehlerhaft ist beziehungsweise im Sinne funktionaler Sicherheit zu gewährleisten, dass die Pose korrekt ist. Auch wenn dies so beschrieben ist, dass die von der Robotersteuerung bestimmte Pose die führende Größe ist, die validiert wird, lässt sich dies ebenso andersherum lesen, d.h. die Kinematikinformationen werden durch die vom Roboter bestimmte Pose bestätigt. Das Ergebnis ist jedenfalls eine sichere Bestimmung der Pose zumindest in den relevanten Freiheitsgraden. Diese sichere Information kann während des Betriebs des Roboters insbesondere zu dessen dynamischer Absicherung mit enger Zusammenarbeit mit Personen genutzt werden.

Die Erfindung geht von dem Grundgedanken aus, als weiteren Sensor einen Initialsensor zu verwenden (IMU, Inertial Measurement Unit). Die Sensorinformationen beziehungsweise die daraus abgeleitete Kinematikinformationen sind demnach Beschleunigungen und/oder Winkelgeschwindigkeiten. Damit lassen sich die Kinematikinformationen nicht unmittelbar mit einer Pose vergleichen. Die Erfinder haben weiterhin festgestellt, dass die Integration einer Winkelgeschwindigkeit zu einer Orientierung oder gar die doppelte Integration einer Beschleunigung zu einer Position für eine Validierung zu stark fehlerbehaftet ist. Daher erfolgt die Validierung auf Ebene von Geschwindigkeiten. Es wird folglich aus der von der Robotersteuerung bestimmten Pose ein erster Geschwindigkeitswert und aus den Kinematikinformationen ein zweiter Geschwindigkeitswert gewonnen. Zur Validierung werden diese beiden Geschwindigkeitswerte miteinander verglichen.

Die Erfindung hat den Vorteil, dass mit einer vergleichsweise einfachen und kostengünstigen Sensorik eine Validierung ermöglicht wird. Mit validierten Robotergeschwindigkeiten sind jedenfalls auf einem gewissen Sicherheitsniveau Rückschlüsse über die Pose möglich. In der Anwendung kann eine angemessene Balance zwischen Sicherheitsniveau und Aufrechterhaltung der Verfügbarkeit gewählt werden. Die validierte Pose bildet die Grundlage für eine angepasste Absicherung wie dynamische Schutzfelder oder Speed-and-Separation-Monitoring und ermöglicht eine engere Zusammenarbeit von Mensch und Roboter.

Die Robotersteuerung berechnet vorzugsweise die Vorwärtskinematik des Roboters und gibt eine damit bestimmt Pose aus. Vorwärtskinematik ist ein Begriff aus der Robotik. Sie beschreibt, wie sich die Kinematik des Endeffektors aus den einzelnen Gelenkwinkeln eines seriellen Manipulators insbesondere mit Hilfe der Denavit-Hartenberg-Transformation ermitteln lässt. Die Robotersteuerung berechnet die Vorwärtskinematik ohnehin für ihre Bewegungsplanung und Bewegungsausführung. Auf diese Information des Roboters kann das erfindungsgemäße Verfahren zurückgreifen.

Der erste Geschwindigkeitswert wird bevorzugt durch Differenzieren aus mindestens zwei Bestimmungen der Pose der Robotersteuerung zu unterschiedlichen Zeitpunkten ermittelt. Dabei wird die Funktion Pose(t) abgeleitet, um den ersten Geschwindigkeitswert zu erhalten. Eine Pose zu mindestens zwei Zeitpunkten ist erforderlich, um einen Differenzenquotienten als Annäherung an die Ableitung zu bilden. Differenzieren der Position ergibt die Geschwindigkeit der Translation, also das, was üblicherweise unter einer Geschwindigkeit verstanden wird, und Differenzieren der Orientierung eine Winkelgeschwindigkeit, jeweils in bis zu drei Komponenten entsprechend den bis zu zweimal drei Freiheitsgraden der Pose.

Der Inertialsensor weist bevorzugt einen Beschleunigungssensor auf, der als Kinematikinformation eine Beschleunigungsinformation erzeugt. Ein solcher Beschleunigungssensor, auch als Accelerometer bezeichnet, liefert Kinematikinformationen in bis zu drei Freiheitsgraden der Translation oder Position. Diese Kinematikinformationen werden zum Validieren der translatorischen Geschwindigkeit verwendet. Translatorische Geschwindigkeit bezeichnet die übliche Geschwindigkeit als Gegenbegriff zu einer Winkelgeschwindigkeit.

Der zweite Geschwindigkeitswert wird bevorzugt durch Integrieren der Beschleunigungsinformation ermittelt. Es wird hier nur eine einmalige Integration benötigt, nicht die zweifache Integration bis zu einer Position. Umgekehrt wird der Positionsanteil der Pose vorzugsweise differenziert, und auch dies nur einmal. Die beiden Geschwindigkeitswerte treffen sich gleichsam auf halbem Weg, so dass sich Fehler nicht durch zweifache Integration oder Ableitung zu sehr kumulieren. Etwas unsauber, aber plastisch ausgedrückt wird die integrierte Beschleunigung des Inertialsensors mit der abgeleiteten Vorwärtskinematik verglichen, bezogen auf deren Positionsanteil.

Der Inertialsensor weist bevorzugt einen Drehratensensor auf, der als Kinematikinformation eine Winkelgeschwindigkeitsinformation erzeugt. Der Drehratensensor, auch als Gyrometer bezeichnet, liefert somit eine Kinematikinformation in bis zu drei Freiheitsgraden der Rotation oder Orientierung. Der entsprechende zweite Geschwindigkeitswert kann beispielsweise mit einem durch Ableitung aus einem Orientierungsanteil der Pose gewonnenen ersten Geschwindigkeitswert verglichen werden. Somit werden zum Validieren Winkelgeschwindigkeiten verglichen. Wiederum etwas unsauber, aber plastisch werden Winkelgeschwindigkeiten mit der abgeleiteten Vorwärtskinematik verglichen, diesmal bezogen auf den Orientierungsanteil statt auf den Positionsanteil. Bei der Orientierung ist eine Integration der Kinematikinformation des Inertialsensors nicht erforderlich, weil direkt Winkelgeschwindigkeiten und nicht Winkelbeschleunigungen gemessen werden.

Der Inertialsensor weist bevorzugt weitere Einzelsensoren auf, insbesondere ein Magnetometer. Damit werden aber nicht unbedingt zusätzliche Kinematikinformationen gewonnen, sondern die Beschleunigungen und Winkelgeschwindigkeiten verbessert, um beispielsweise eine sonst verfälschende Erdbeschleunigung herauszurechnen.

Eine Orientierungsinformation der von der Robotersteuerung bestimmten Pose wird vorzugsweise zunächst in Quaternionen verarbeitet und dann für den ersten Geschwindigkeitswert in Eulerwinkel umgerechnet. Bei Aneinanderreihung von Rotationen in Eulerwinkeln kann es zu einem sogenannten "Gimbal Lock" kommen. Das ist der Verlust eines Freiheitsgrades durch ungünstige Abhängigkeiten, der Begriff leitet sich von einer kardanischen Aufhängung ab, bei der in diesem kritischen Zustand zwei Drehachsen parallel zueinander liegen. Die Problematik tritt bei der Berechnung in Quaternionen nicht auf, und durch anschließende Umrechnung in Eulerwinkeln wird wieder eine gewohnte und mit den Kinematikinformationen vergleichbare Repräsentation erreicht.

Der Inertialsensor stellt bevorzugt Kinematikinformationen in Echtzeit bereit, insbesondere mit mindestens der Messrate, mit der die Robotersteuerung eine Pose bestimmt. Damit ist sichergestellt, dass die Validierung vollständig und rechtzeitig möglich ist.

In dem Bewegungsablauf des Roboters ist mindestens ein besonderer Wegpunkt vorgesehen, wobei die Validierung nur in einer Umgebung des besonderen Wegpunkts erfolgt und/oder die Validierung zusätzlich durch den besonderen Wegpunkt gestützt wird. Ein besonderer Wegpunkt auf der Roboterbahn, wofür sogleich Beispiele gegeben werden, kann eine erhöhte Gefahr bedeuten. Dementsprechend besteht für solche Positionen ein besonderer Validierungsbedarf, während an anderen Orten ein Fehler in der Pose möglicherweise gar nicht sicherheitsrelevant ist. Umgekehrt ist denkbar, dass an einem besonderen Wegpunkt über eine dritte Quelle weiterer Informationen verfügbar sind, mit denen zusätzlich validiert werden kann.

Der besondere Wegpunkt ist bevorzugt ein sicherer Nullpunkt des Roboters oder ein Umschaltpunkt, ein Arbeitspunkt oder ein Prüfpunkt, wobei an einem Umschaltpunkt ein Arbeitsvorgang beginnt oder endet, an einem Arbeitspunkt der Roboter mit einem Werkstück in Berührung kommt und an einem Prüfpunkt eine Funktionsprüfung eines Sicherheitssensors zum Absichern des Roboters erfolgt. Der sichere Nullpunkt ist eine Position oder Pose, die bereits ohne zusätzliche Validierung von der Robotersteuerung sicher bereitgestellt wird. Hier kann eine zusätzliche Validierung oder eine Verankerung der Validierung anhand der besonders verlässlichen Pose erfolgen. Eine besondere Gefahr besteht in unmittelbarer Umgebung des Arbeitspunktes, weil hier der Roboter bestimmungsgemäß ein Werkstück berührt und dabei ein Körperteil quetschen könnte. In gewissem Maße gilt das für die gesamte Phase zwischen Umschaltpunkt, Arbeitspunkt und Rückkehr zum Umschaltpunkt. In anderen Abschnitten der Bewegungsbahn ist möglicherweise ein geringeres Sicherheitsniveau ausreichend. Alternativ ist denkbar, die Pose stets über die gesamte Bewegungsbahn hinweg zu validieren. Umschaltpunkt, Arbeitspunkt und Prüfpunkt werden in einigen Anwendungen durch eine weitere Quelle bestimmt, insbesondere einen Sicherheitssensor, der diese Punkte aus seinen eigenen Sensorinformationen wiederfindet. Solche Informationen können ähnlich dem sicheren Nullpunkt für eine noch verlässlichere Validierung genutzt werden.

Der Roboter wird bevorzugt zur Vermeidung von Kollisionen von einem mitbewegten Sicherheitssensor abgesichert, wobei der Sicherheitssensor insbesondere seine Absicherung an die validierte Pose anpasst und/oder einen besonderen Wegpunkt erkennt. Der mitbewegte Sicherheitssensor überwacht besonders bevorzugt ein Schutzfeld, also einen durch eine 2D- oder 3D-Geomtrie definierten Teilbereich seines Erfassungsbereichs, wobei diese Geometrie durch Anordnung und Bauart des Sensors bedingt und/oder konfiguriert sein kann und Eingriffe in ein Schutzfeld zu einer sicherheitsgerichteten Reaktion des Roboters führen, wie einem Verlangsamen, Ausweichen oder Anhalten. Besonders bevorzugt ist das Schutzfeld eine virtuelle Schutzglocke aus berührungslose distanzmessenden Strahlen oder Flächen, insbesondere mit einem Lichtlaufzeitverfahren, wie in den einleitend genannten Dokumenten DE 10 2015 112 656 A1, DE 10 2019 110 882 A1 oder EP 3 744 482 A1. Dank des erfindungsgemäßen Verfahrens kann der Sicherheitssensor auf sicher erfasste Posen zurückgreifen und dies für die Anpassung seiner Schutzfelder oder Schutzglocken ausnutzen. Ähnliches gilt für alternative Absicherungskonzepte wie Speed-and-Separation. Der Sicherheitssensor kann außerdem noch einmal unabhängig besondere Wegpunkte bestätigen wie im Vorabsatz erläutert. Der Inertialsensor kann an dem Sicherheitssensor angebracht oder sogar darin integriert werden.

Der Inertialsensor wird bevorzugt nachträglich an dem Roboter angebracht und die Validierung der Pose des Roboters nachgerüstet. Dadurch ist es sehr einfach möglich, einen Roboter, der zuvor nur unsichere Informationen über seine Posen ausgeben konnte, mit der zusätzlichen Funktionalität des erfindungsgemäßen Verfahrens auszurüsten. Das erleichtert dessen Absicherung und ermöglicht engere Kooperationen, die der Roboter zuvor nicht unterstützen konnte.

Der Inertialsensor ist bevorzugt an einer Armspitze des Roboters angebracht. Die Armspitze wird auch als Endeffektor, Hand oder Werkzeugspitze (TCP, Tool Center Point) bezeichnet, und deren Kinematik ist wegen der kumulierten Wirkung der verschiedenen Gelenke relativ komplex. Deshalb ist es besonders nützlich, hier für eine einfache Möglichkeit der Validierung über den Inertialsensor und das erfindungsgemäße Verfahren zu sorgen. Trotzdem ist es alternativ möglich, den Inertialsensor oder auch mehrere Inertialsensoren an anderen Teilen des Roboters anzubringen. Wird der Inertialsensor nicht direkt an der Armspitze angebracht, sondern beispielsweise an einem absichernden Sicherheitssensor, so ist die entsprechende starre Transformation für den Versatz bei der Bestimmung der Pose und der Validierung vorzugsweise zu berücksichtigen.

Die Kinematikinformationen werden bevorzugt mit einem Filter zum Unterdrücken von erwarteten Vibrationen der Roboterbewegung gefiltert, wobei das Filter insbesondere in einer Einlernphase unter Bewegen des Roboters parametriert wird. Der Inertialsensor ist meist empfindlich genug, um auch die Vibrationen der Roboterbewegungen wahrzunehmen, die jedoch die Kinematikinformationen verfälschen würden. Daher ist es sinnvoll, die Effekte der Vibrationen herauszufiltern. Das Filter kann in einer Einlernphase für die tatsächlich auftretenden Vibrationen geeignet parametriert werden.

Der Inertialsensor weist bevorzugt ein Barometer auf, mit dem eine Höhenposition der Pose der Robotersteuerung validiert wird. Sofern ein solcher Messwert verfügbar ist, bietet das eine weitere, unabhängige Quelle von Informationen über einen Teil der Pose, nämlich die Position in Z-Richtung. Diese Information kann vorteilhaft für eine weiter verbesserte Validierung herangezogen werden.

Die erfindungsgemäße sichere Posenbestimmungsvorrichtung zum Validieren einer Pose eines Roboters mit einer Position und/oder einer Orientierung weist eine Steuer- und Auswertungseinheit, eine Schnittstelle zu einer Robotersteuerung des Roboters und einen mit dem Roboter mitbewegt montierten Inertialsensor auf. Dabei ist das erfindungsgemäße Verfahren in einer seiner Ausführungsformen in der Steuer- und Auswertungseinheit implementiert. Vorzugsweise wird ein System aus Roboter und sicherer Posenbestimmungsvorrichtung gebildet. Zu diesem System gehört bevorzugt ein mitbewegter Sicherheitssensor zur Vermeidung von Kollisionen mit dem Roboter beziehungsweise zum Schutz vor Unfällen und Verletzungen von Personen. Zudem ist zusätzliche Steuer- und Auswertungsfunktionalität in beliebiger direkt oder per Netzwerk angeschlossener Hardware denkbar, insbesondere einer Sicherheitssteuerung.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung eines Roboters mit daran angebrachten Inertialsensor zur Validierung der Roboterpose;
- Fig. 2: eine schematische Darstellung der verschiedenen Komponenten und der für die Validierung der Roboterpose verwendeten Informationen;
- Fig. 3: beispielhafte Messdaten in einem Vergleich von Geschwindigkeiten, die aus einer von der Robotersteuerung bereitgestellten Pose einerseits und einem Inertialsensor andererseits bestimmt sind; und
- Fig. 4: eine Darstellung eines Roboters mit nachgerüstetem Inertialsensor.

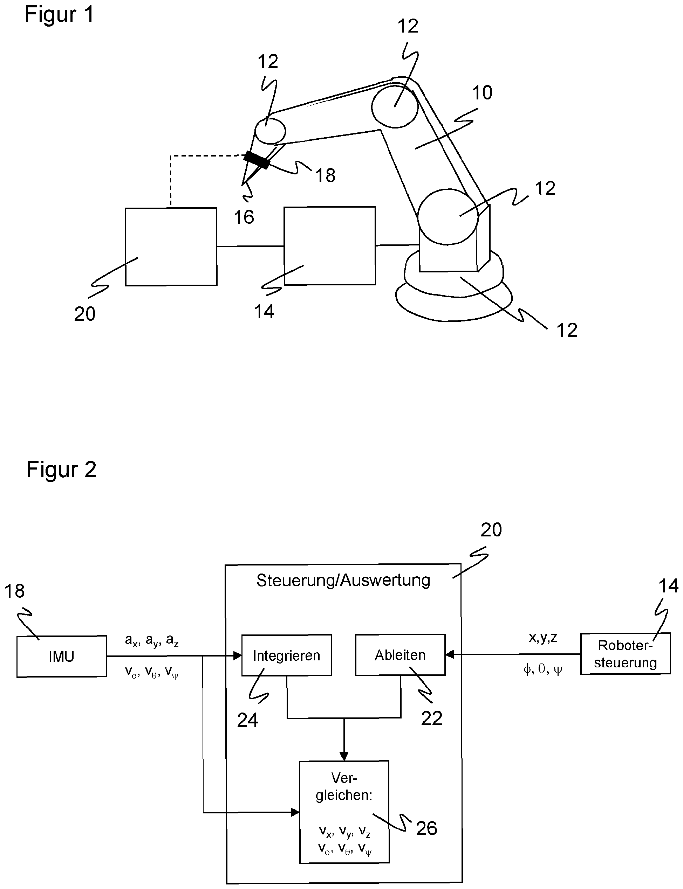

Figur 1 zeigt eine Übersichtsdarstellung eines Roboters 10, hier eines Roboterarms mit einer Vielzahl von Gelenken 12. Die Stellungen der Gelenke 12 werden durch nicht gezeigte Positionssensoren des Roboters 10 überwacht, beispielsweise Drehgeber. Diese Positionssensoren sind mit einer Robotersteuerung 14 verbunden, die anders als dargestellt auch in den Roboter 10 integriert sein kann. Die Robotersteuerung 14 ist zum einen für sämtliche Bewegungen und Abläufe des Roboters 10 zuständig, worauf hier nicht näher eingegangen wird. Außerdem empfängt sie die Sensordaten der Positionssensoren, um daraus die jeweilige Pose des Roboters 10 zu bestimmen. Das betrifft insbesondere die Pose eines Endeffektors 16 an der Spitze des Roboterarms. Die Berechnung der Kinematik des Endeffektors 16 aus den einander überlagernden Bewegungen der einzelnen Gelenke 12 wird auch als Vorwärtskinematik bezeichnet.

An dem Endeffektor 16 ist ein Inertialsensor 18 angebracht (IMU, Inertial Measurement Unit). Der Inertialsensor 18 kann mehrere Einzelsensoren zusammenfassen, wie ein Accelerometer, ein Gyrometer oder ein Magnetometer, und misst die Beschleunigung in bis zu drei Freiheitsgraden der Translation und/oder die Winkelgeschwindigkeit in bis zu drei Freiheitsgraden der Rotation. Alternativ ist eine Anbringung an einer anderen Stelle an dem Roboter 10 als an dem Endeffektor 16 denkbar, oder der Einsatz mehrerer Inertialsensoren 18 an unterschiedlichen Stellen.

Die eigenen, nicht gezeigten Positionssensoren des Roboters 10 sind selbst vorzugsweise keine sicheren Sensoren gemäß den einleitend genannten Normen, die Vorwärtskinematik und damit die jeweilige Pose des Roboters 10 beziehungsweise von dessen Endeffektor 16 sind somit keine sicheren Größen im Sinne funktionaler Sicherheit. Deshalb wird die Pose mit Hilfe des Inertialsensors 18 validiert. Alternativ ist denkbar, dass die Pose doch sicher erfasst ist und mit Hilfe des Inertialsensors 18 ein höheres Sicherheitsniveau erreicht wird.

Eine Steuer- und Auswertungseinheit 20, vorzugsweise eine Sicherheitssteuerung, ist mit der Robotersteuerung 14 und dem Inertialsensor 18 verbunden. Sie hat dadurch Zugriff auf die Vorwärtskinematik und damit die aktuell bestimmte Pose des Roboters 10 und die Messdaten des Inertialsensors 18. Somit kann die Steuer- und Auswertungseinheit 20 die Pose validieren, wie im Folgenden noch näher erläutert. Der Inertialsensor 18 ist vorzugsweise echtzeitfähig mit einer Messrate, die mindestens so schnell ist wie die Aktualisierung der Vorwärtskinematik, so dass diese kontinuierlich validiert werden kann.

Die in Figur 1 gezeigte klare Aufteilung der Auswertungsfunktionalität in einer Robotersteuerung 14 und einer externen Steuer- und Auswertungseinheit 20 dient vor allem der übersichtlichen Erläuterung, es sind andere Aufteilungen über mehr oder weniger Hardwaremodule denkbar. Die Robotersteuerung 14 ist auch in praktischen Anwendungsfällen vorzugsweise separiert und nur über ihre vom Hersteller spezifizierten Schnittstellen ansprechbar. Trotzdem ist denkbar, die Funktionalität der Steuer- und Auswertungseinheit 20 zumindest teilweise in die Robotersteuerung 14 zu integrieren. Andererseits kann die Steuer- und Auswertungseinheit 20 zumindest teilweise in den Inertialsensor 18 oder in einen zusätzlichen, nicht gezeigten Sicherheitssensor zur Kollisionsvermeidung des Roboters 10 integriert oder für diesen Sicherheitssensor zuständig sein. Die Verbindungen können jeweils drahtlos oder drahtgebunden sowie direkt oder indirekt beispielsweise durch eine übergeordnete Steuerung, wie eine Roboterzellensteuerung, realisiert sein.

Figur 2 zeigt nochmals die für die Validierung der Pose des Roboters 10 maßgeblichen Komponenten in einer schematischen Darstellung. Es ist eine Art Maximalkonfiguration gezeigt, in der alle sechs Freiheitsgrade der Vorwärtskinematik beziehungsweise der Pose des Roboters 10 mit Hilfe des Inertialsensors 18 validiert werden. In verschiedenen Ausführungsformen können auch nur einige Freiheitsgrade validiert werden, beispielsweise diejenigen der Translation oder diejenigen der Rotation oder solche, die auf bestimmte Ebenen, Geraden oder Drehachsen beschränkt sind.

Von dem Inertialsensor 18 werden Beschleunigungen aₓ, a_{y}, a_{z} für die Freiheitsgrade der Translation und Winkelgeschwindigkeiten v_{φ}, v_{θ}, v_{ψ} für die Freiheitsgrade der Rotation gemessen. Wie schon erwähnt, kann der Inertialsensor 18 mehrere Einzelsensoren umfassen, wobei eine Sensorfusion der verschiedenen Datengeber zu den genannten und in Figur 2 gezeigten Ausgabewerten des Inertialsensors 18 erfolgt.

Andererseits berechnet die Robotersteuerung 14 fortlaufend aus den Messinformationen der nicht gezeigten Positionssensoren die Vorwärtskinematik, so dass die Position x, y, z und die Orientierung φ, θ, ψ allerdings noch nicht-sicher abgerufen werden können. Im Zusammenhang mit Orientierungen gibt es noch die Problematik des sogenannten "Gimbal Lock": bei der Multiplikation von mehreren Winkeln im Eulerraum kann durch verschiedene Drehungen mehrerer Achsen die gleiche Orientierung resultieren. Das System verliert dann einen Freiheitsgrad, was zu Berechnungsfehlern führt. Daher ist es vorteilhaft, die Roboterdaten zunächst in Quaternionen abzuspeichern und die Verkettungen der Rotationen im Quaternionenschiefkörper zu berechnen. In dieser Repräsentation treten besagte Mehrdeutigkeiten nicht auf, es gibt keinen Gimbal Lock. Für eine Vergleichbarkeit mit Informationen von dem Inertialsensor 18 können die Quaternionen wieder in Eulerwinkel umgerechnet werden.

Die Steuer- und Auswertungseinheit 20 kann nun zur Validierung der Pose des Roboters 10 die Kinematikinformationen des Inertialsensors 18 heranziehen. Dies geschieht vorzugsweise in Echtzeit, und dafür ist die Abtastrate des Inertialsensors 18 vorteilhaft mindestens so hoch wie die Ausgaberate der Vorwärtskinematik des Roboters 10. Bevorzugtwerden Konfidenzintervalle nach IEC TS 62998 bestimmt, um festzulegen, wann eine Validierung noch als erfolgreich gilt. Schlägt eine Validierung fehlt, so wird vorzugsweise eine sicherheitsgerichtete Reaktion des Roboters 10 eingeleitet, die ihn verlangsamt, ausweichen lässt oder stoppt. Es ist denkbar, ein Signal für die sicherheitsgerichtete Reaktion an andere Sensoren oder Steuerungen weiterzugeben, die dann gegebenenfalls ihrerseits sicherheitsgerichtete Reaktionen auslösen.

Es scheint zunächst naheliegend, die Beschleunigungen des Inertialsensors 18 zweifach und dessen Winkelgeschwindigkeiten einfach zu integrieren, so dass sie direkt mit der Pose von der Robotersteuerung 14 vergleichbar werden. Allerdings haben gerade bei zweifacher Integration schon kleine Messfehler der Beschleunigung beispielsweise durch Sensorrauschen einen großen Effekt auf die resultierende Position, dies noch umso mehr bei längeren Integrationszeiten. Das gilt ganz analog auf dem umgekehrten Weg, die Pose zweifach zu differenzieren und mit einer Beschleunigung zu vergleichen.

Durch Aufbereitung der Messdaten oder den Einsatz geeigneter Filter lässt sich der Effekt reduzieren, was aber in der Praxis nur in einer nachträglichen Auswertung mit gezielter Filteranpassung gelingt. In Echtzeit unter Verwendung allgemeingültiger Filter werden keine befriedigenden Ergebnisse erzielt.

Deshalb schlägt die Erfindung eine Art Mittelweg ein, auf Ebene von Geschwindigkeiten zu validieren. Dadurch wird eine doppelte Integration oder Ableitung mit deren besonders großem Fehler vermieden. Dafür werden in einem Ableitungsblock 22 die Positionen x, y, z und die Winkel φ, θ, ψ aus der Vorwärtskinematik der Robotersteuerung 14 nach der Zeit abgeleitet, und es ergeben sich Geschwindigkeitskomponenten vₓ, v_{y}, v_{z} der Translation und v_{φ}, v_{θ}, v_{ψ} der Rotation. Andererseits werden die Beschleunigungen aₓ, a_{y}, a_{z} von dem Inertialsensor 18 in einem Integrationsblock 24 zu Geschwindigkeitskomponenten vₓ, v_{y}, v_{z} integriert. Die Winkelgeschwindigkeiten v_{φ}, v_{θ}, v_{ψ} des Inertialsensors 18 müssen nicht integriert werden, da in Rotation bereits Winkelgeschwindigkeiten und nicht Winkelbeschleunigungen gemessen werden.

Bereits die ursprünglichen Messwerte der Positionssensoren des Roboters 10 und des Inertialsensors 18 sind fehlerbehaftet, und die einfache Integration beziehungsweise Ableitung erzeugt weitere Fehler. Allerdings sind die aufgesammelten Fehler nun begrenzt, weil nicht doppelt integriert oder differenziert wird. Ob die Übereinstimmung ausreicht, die Pose der Robotersteuerung 14 also mit den Messdaten des Inertialsensors 18 validiert werden kann, entscheidet ein Vergleichsblock 26. Die auf den beiden unterschiedlichen Pfaden erzeugten Geschwindigkeitskomponenten vₓ, v_{y}, v_{z}, v_{φ}, v_{θ}, v_{ψ} müssen dafür innerhalb eines Toleranzrahmens übereinstimmen, der beispielsweise durch die oben diskutierten Konfidenzintervalle bestimmt ist.

Es sei nochmals wiederholt, dass nicht in allen Freiheitsgraden validiert werden muss. Eine besonders vorteilhafte Ausführungsform beschränkt sich auf die Position beziehungsweise Translation, also x, y, z und vₓ, v_{y}, v_{z}. beziehungsweise aₓ, a_{y}, a_{z}.

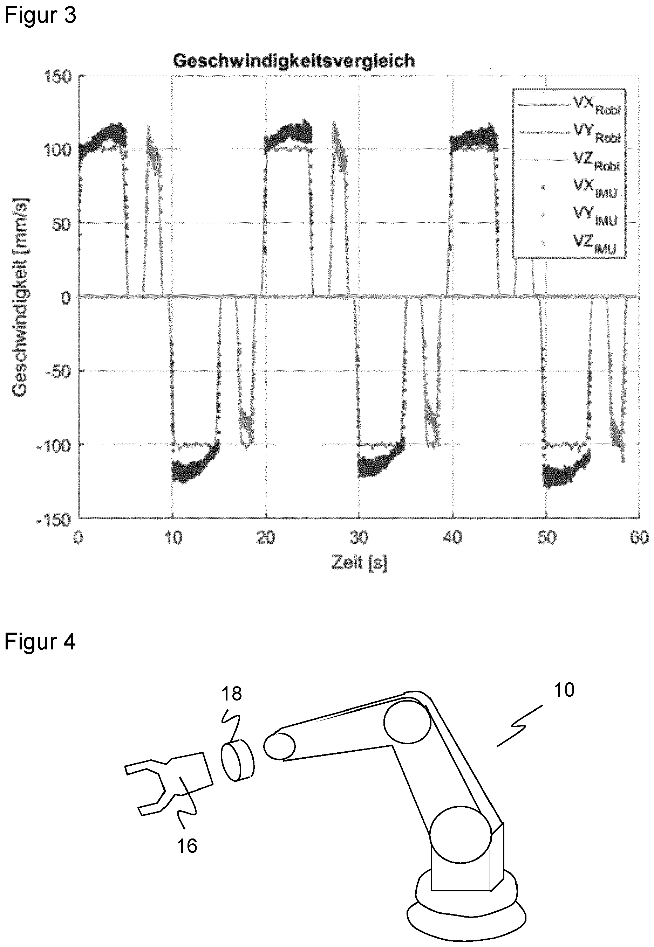

Figur 3 zeigt einen beispielhaften Geschwindigkeitsvergleich anhand von Messdaten eines realen Aufbaus. Validiert wird hier nur die Position x, y, z, und dafür werden die aus der Vorwärtskinematik der Robotersteuerung 14 abgeleiteten Geschwindigkeiten vx_{robi}, vy_{robi}, vz_{robi} mit den aus den Beschleunigungen des Inertialsensors 18 integrierten Geschwindigkeiten vx_{IMU}, vy_{IMU}, vz_{IMU} verglichen. Es zeigen sich noch gewisse Schwierigkeiten des Inertialsensors 18, Plateaus mit gleichbleibender Geschwindigkeit nachzuvollziehen, weil hier keine Beschleunigungen auftreten und der Inertialsensor 18 damit keine neuen Messwerte erhält. Die Flanken oder Beschleunigungsphasen hingegen werden sehr gut nachgezeichnet. Aber auch die Plateaus können durch geeignete Toleranzrahmen und möglicherweise eine filternde Nachbearbeitung erfolgreich validiert werden.

Die beschriebene Validierung kann über verschiedene Abschnitte der Bewegungsbahn des Roboters 10 oder verschiedene Arbeitsschritte variieren. Solche Abschnitte werden nun beispielhaft anhand besonderer Wegpunkte unterschieden, die aber nicht zwingend ausdehnungslos sein müssen. Ein Beispiel für einen besonderen Wegpunkt ist eine sichere Ausgangsposition (safe home position). Wenn die Bewegungsbahn diese sichere Ausgangsposition einbezieht, so kann hier die Validierung an einer weiteren Quelle erfolgen oder sich neu verankern, um aufgelaufene Driften zu eliminieren.

Weitere Beispiele sind ein Arbeitspunkt und ein Umschaltpunkt. Am Arbeitspunkt kommt der Endeffektor 16 mit einem Werkstück in Berührung, um es zu greifen oder anders zu bearbeiten. Am Umschaltpunkt beginnt und endet eine Annäherungsbewegung an den Arbeitspunkt. Das ist beispielsweise wichtig, um Schutzfelder eines Sicherheitssensors anzupassen, der nicht durch das Werkstück oder dessen Untergrund auslösen soll. In diesen Phasen ist die Absicherung besonders kritisch, und daher kann sich eine Validierung auf den Arbeitspunkt oder den Bereich zwischen Umschaltpunkt und Arbeitspunkt beschränken. Für andere Absicherungskonzepte, beispielsweise Speed-and-Separation-Monitoring, ist hingegen eine kontinuierliche Validierung über die gesamte Bewegungsbahn zu bevorzugen.

Umgekehrt ist ein Sicherheitssensor vorzugsweise in der Lage, den Umschaltpunkt und Arbeitspunkt anhand seiner eigenen Messungen zu erkennen. Damit gibt es eine weitere Informationsquelle ähnlich wie bei einer sicheren Ausgangsposition, die in die Validierung einbezogen werden kann oder mittels derer aufgelaufene Driften zurückgesetzt werden können. Ein weiterer besonderer Wegpunkt, an dem sich ein Sicherheitssensor selbst lokalisiert, ist der sogenannte Prüfpunkt. Das ist eine Position, in der sich der Sicherheitssensor selbst testet und dafür beispielsweise eine Referenzkontur wiedererkennt.

Figur 4 illustriert, dass die Validierung mittels Inertialsensor 18 an praktisch jedem beliebigen Roboter 10 nachgerüstet werden kann. Dafür wird beispielsweise eine Art Adapter mit dem Inertialsensor 18 für den Endeffektor 16 verwendet. Damit wird ein Roboter 10 nachträglich in die Lage versetzt, sichere, validierte Posen auszugeben und so viel enger zu kooperieren als zuvor.

Ein Beschleunigungssensor oder Accelerometer, der vorzugsweise Teil des Inertialsensors 18 ist, misst sehr empfindlich und nimmt deshalb auch durch die Gelenkregelung beziehungsweise Roboterbewegungen entstehende Vibrationen wahr. Deshalb wird vorzugsweise ein Filter für die gemessenen Beschleunigungen eingesetzt, das charakteristische Anteile derartiger Vibrationen unterdrückt. Die Filtereinstellungen, insbesondere ein Passband zum Ausblenden bestimmter nieder- oder hochfrequenter Störanteile, können in einem Einlernverfahren bestimmt werden, in dem der Roboter 10 typische Bewegungsmuster vollzieht.

In einer vorteilhaften Kalibration wird zum einen ein möglicher Versatz in Translation und/oder Orientierung zwischen Inertialsensor 18 und dem Bezugspunkt der von der Robotersteuerung 14 bestimmten Pose ermittelt. In einer Kalibierfahrt können ferner die jeweiligen Konfidenzintervalle der Messwerte bestimmt werden. Auch der Inertialsensor 18 wird vorteilhafterweise anfänglich oder sogar zyklisch oder auf Anforderung vor einem Validierungsauftrag oder bei Anforderung einer Sicherheitsfunktion kalibriert, insbesondere hinsichtlich seiner Nordausrichtung.

In seiner Nordausrichtung ist der Inertialsensor 18 potentiell anfällig. Um sie stabil zu halten, kann ein sogenanntes AHRS verwendet werden (Attitude Heading Reference System). Allerdings wird ein Magnetometer unter anderem durch die Regelungsströme für die Antriebe in den Gelenken 12 des Roboters 10 gestört. Daher sind Abschirmmaßnahmen etwa mit µ-Metall an relevanten Stellen denkbar, die aber das Erdmagnetfeld weiterhin erfassbar lassen. Ein nicht-metallisches Gehäuse verhindert, dass dort störende Magnetfelder induziert werden.

Einige Inertialsensoren 18 umfassen auch ein Barometer. Das Auflösungsvermögen der Höhenbestimmung liegt bereits heute unter 1 m und wird voraussichtlich in den kommenden Jahren signifikant weiter verbessert. Damit ist eine zusätzliche Validierung der Höhe oder Z-Koordinate denkbar.

Der Inertialsensor 18 muss nicht separat an dem Endeffektor 16 verbaut werden. Es sind nicht nur andere Positionen am Roboter 10 denkbar, sondern auch die Kombination mit anderer Sensorik, die am Roboter 10 geführt wird. Dazu zählen der mehrfach erwähnte Sicherheitssensor oder eine Kamera zur sichtgestützten Roboterführung (Vision Guidance Camera). Ein jeweiliger Versatz zur Bezugspose der Vorwärtskinematik der Robotersteuerung 14 sollte berücksichtigt werden. Die weitere Sensorik kann im Übrigen einen zusätzlichen Kanal für die Validierung darstellen oder einen der beiden diskutierten Kanäle ersetzen.

Je nach Sicherheitsniveau kann gemäß IEC 61508 eine homogen redundante Architektur verfolgt werden, um eine Zweikanaligkeit herzustellen. Es ist ebenso vorstellbar, dass zwar die Sensorik redundant verbaut wird, dass aber beispielsweise unterschiedliche Fusionsalgorithmen verwendet werden, um die Validierungsgrößen abzuleiten.

## Patentansprüche

1. Verfahren zum Validieren einer Pose eines Roboters (10) mit einer Position und/oder einer Orientierung, bei dem die Pose zumindest teilweise durch eine Robotersteuerung (14) des Roboters (10) bestimmt wird, weitere Kinematikinformationen der Pose aus Sensorinformationen eines mit dem Roboter (10) mitbewegten Sensors (18) bestimmt werden und die von der Robotersteuerung (14) bestimmte Pose anhand der Kinematikinformationen validiert wird, **dadurch gekennzeichnet,**
**dass** der Sensor ein Inertialsensor (18) ist, dass aus der von der Robotersteuerung (14) bestimmten Pose ein erster Geschwindigkeitswert und aus den Kinematikinformationen ein zweiter Geschwindigkeitswert ermittelt und dass zur Validierung die Geschwindigkeitswerte miteinander verglichen werden.

2. Verfahren nach Anspruch 1,
wobei die Robotersteuerung (14) die Vorwärtskinematik des Roboters (10) berechnet und eine damit bestimmt Pose ausgibt.

3. Verfahren nach Anspruch 1 oder 2,
wobei der erste Geschwindigkeitswert durch Differenzieren aus mindestens zwei Bestimmungen der Pose der Robotersteuerung (14) zu unterschiedlichen Zeitpunkten ermittelt wird.

4. Verfahren nach einem der vorhergehenden Ansprüche,
wobei der Inertialsensor (18) einen Beschleunigungssensor aufweist, der als Kinematikinformation eine Beschleunigungsinformation erzeugt, und wobei insbesondere zum Validieren translatorische Geschwindigkeiten verglichen werden

5. Verfahren nach Anspruch 4,
wobei der zweite Geschwindigkeitswert durch Integrieren der Beschleunigungsinformation ermittelt wird.

6. Verfahren nach einem der vorhergehenden Ansprüche,
wobei der Inertialsensor (18) einen Drehratensensor aufweist, der als Kinematikinformation eine Winkelgeschwindigkeitsinformation erzeugt, und wobei insbesondere zum Validieren Winkelgeschwindigkeiten verglichen werden.

7. Verfahren nach einem der vorhergehenden Ansprüche,
wobei eine Orientierungsinformation der von der Robotersteuerung (14) bestimmten Pose zunächst in Quaternionen verarbeitet und dann für den ersten Geschwindigkeitswert in Eulerwinkel umgerechnet wird.

8. Verfahren nach einem der vorhergehenden Ansprüche,
wobei der Inertialsensor (18) Kinematikinformationen in Echtzeit bereitstellt, insbesondere mit mindestens der Messrate, mit der die Robotersteuerung (14) eine Pose bestimmt.

9. Verfahren nach einem der vorhergehenden Ansprüche,
wobei in dem Bewegungsablauf des Roboters (14) mindestens ein besonderer Wegpunkt vorgesehen ist, und wobei die Validierung nur in einer Umgebung des besonderen Wegpunkts erfolgt und/oder die Validierung zusätzlich durch den besonderen Wegpunkt gestützt wird, wobei der besondere Wegpunkt insbesondere ein sicherer Nullpunkt des Roboters (10) oder ein Umschaltpunkt, ein Arbeitspunkt oder ein Prüfpunkt ist, wobei an einem Umschaltpunkt ein Arbeitsvorgang beginnt oder endet, an einem Arbeitspunkt der Roboter (10) mit einem Werkstück in Berührung kommt und an einem Prüfpunkt eine Funktionsprüfung eines Sicherheitssensors zum Absichern des Roboters (10) erfolgt.

10. Verfahren nach einem der vorhergehenden Ansprüche,
wobei der Roboter (10) zur Vermeidung von Kollisionen von einem mitbewegten Sicherheitssensor abgesichert wird und wobei der Sicherheitssensor insbesondere seine Absicherung an die validierte Pose anpasst und/oder einen besonderen Wegpunkt erkennt.

11. Verfahren nach einem der vorhergehenden Ansprüche,
wobei der Inertialsensor (18) nachträglich an dem Roboter (10) angebracht und die Validierung der Pose des Roboters (10) nachgerüstet wird und/oder wobei der Inertialsensor (18) an einer Armspitze (16) des Roboters (10) angebracht ist.

12. Verfahren nach einem der vorhergehenden Ansprüche,
wobei die Kinematikinformationen mit einem Filter zum Unterdrücken von erwarteten Vibrationen der Roboterbewegung gefiltert werden, wobei das Filter insbesondere in einer Einlernphase unter Bewegen des Roboters (10) parametriert wird.

13. Verfahren nach einem der vorhergehenden Ansprüche,
wobei der Inertialsensor (18) ein Barometer aufweist, mit dem eine Höhenposition der Pose der Robotersteuerung (14) validiert wird.

14. Sichere Posenbestimmungsvorrichtung zum Validieren einer Pose eines Roboters (10) mit einer Position und/oder einer Orientierung, die eine Steuer- und Auswertungseinheit (20), eine Schnittstelle zu einer Robotersteuerung (14) des Roboters (10) und einen mit dem Roboter (10) mitbewegt montierten Inertialsensor (18) aufweist,
**dadurch gekennzeichnet,**
**dass** die Steuer- und Auswertungseinheit (20) für ein Verfahren nach einem der vorhergehenden Ansprüche ausgebildet ist.

15. System mit einem Roboter (10) und einer sicheren Posenbestimmungsvorrichtung nach Anspruch 14, wobei das System insbesondere einen mitbewegten Sicherheitssensor zur Vermeidung von Kollisionen aufweist.
